# EUROPÄISCHE PATENTSCHRIFT

(11) **EP 2 175 979 B1**
(45) Veröffentlichungstag und Bekanntmachung des Hinweises auf die Patenterteilung: **15.03.2017**
(21) Anmeldenummer: 08785205.9
(22) Anmeldetag: 30.07.2008
(51) Int. Cl.: B01J 13/20

(54) **VERBESSERTE MIKROKAPSELN UND IHRE HERSTELLUNG**
IMPROVED MICROCAPSULES AND THE PRODUCTION THEREOF
MICROCAPSULES AMÉLIORÉES ET LEUR PRODUCTION

(30) Priorität: 30.07.2007 DE 202007010668 U
(43) Veröffentlichungstag der Anmeldung: 21.04.2010
(73) Patentinhaber: Follmann GmbH & Co. KG, 32423 Minden (DE)
(72) Erfinder: MUES, Daniel, 31633 Leese (DE); RÖTHEMEIER, Astrid, 32425 Minden (DE); RÖSLER, Thomas, 31655 Stadthagen (DE); LAST, Klaus, 37520 Osterode (DE)
(74) Vertreter: von Renesse, Dorothea
(86) Internationale Anmeldenummer: PCT/EP2008/006259
(87) Internationale Veröffentlichungsnummer: WO 2009/015872

(56) Entgegenhaltungen:
- EP-A- 1 797 947
- WO-A-01/19509
- WO-A-2007/091223
- JP-A- 2002 038 136
- US-A1- 2007 138 671

## Beschreibung

Die vorliegende Erfindung betrifft Mikrokapselzusammensetzungen mit reduziertem Aldehydanteil, insbesondere Formaldehyd, enthaltend Duroplastharze, insbesondere Aminoplast- und Phenoplastharze, sowie ein Verfahren zur verbesserten Duroplastharzherstellung. Weiterhin betrifft die vorliegende Erfindung die nach dem Verfahren erhältlichen Mikrokapseln und spezifische Verwendungen der so erhältlichen Mikrokapseln. Des weiteren wird ein Verfahren zur Herstellung von Mikrokapseln auf der Basis von Duroplastharzen beschrieben, das zu einer verbesserten Homogenität der so erhaltenen Mikrokapseln führt.

Latentwärmespeicher speichern thermische Energie latent, d.h. verborgen, durch die Änderung des Aggregatzustandes eines Speichermediums. Beim Aufladen kommerzieller Latentwärmespeicher werden meist spezielle Salze oder Paraffine als Speichermedium genutzt, die dabei viel Wärmeenergie aufnehmen (Schmelzwärme) und je nach Phasenübergang beim Erstarren wieder abgeben (Entladen). Genutzt werden also die Phasenübergänge flüssig zu fest bzw. flüssig zu kristallin. Der Vorteil dieser Wärmespeichertechnik beruht hauptsächlich darauf, in einem (je nach Material) genau festgelegten scharfen Schmelztemperaturbereich möglichst viel Wärmeenergie in möglichst wenig Masse zu speichern. Diese so genannten *Phase Change Materials* (Abk. PCM) werden als Latentwärmespeicher in verschiedenen Bereichen wie beispielsweise in der Bauchemie, bei Holzwerkstoffen, für verbesserte Kaltstarteigenschaften in der Motorentechnik, bei Wärmetauschersystemen auch für offene zentrale und dezentrale Lüftungsproblematik etc. verwendet. Da die Latentwärmespeichermaterialien temperaturabhängig auch in der flüssigen Phase vorliegen, ist die Verarbeitung direkt mit den Werkstoffen stark erschwert. Trennungen von den Werkstoffen, Emissionsverluste wären die Folge. Um die entsprechenden Wirksubstanzen zu schützen, bildet demnach die Mikrokapsel das System der Wahl für diese Latentwärmespeichersysteme.

Neue Materialkombinationen auf Basis von Latentwärmespeichen sind in den letzten Jahren untersucht worden. In der DE- A-101 39 171 werden beispielsweise mikroverkapselte Latentwärmespeicher in Gipskartonplatten verwendet. Die EP-A-1 029 016 lehrt die Verwendung von hochvernetzten Acrylatkapselsystemen mit Latentwärmespeichermedien als Kernmaterial für den Einsatz in Beton - oder Gipsbindebaustoffen.

Unter Mikrokapseln versteht man im Allgemeinen Kern-Schale Aufbauten in der Größenordnung von 1 - 1000 µm, welche Feststoffe, Gase oder Flüssigkeiten als Kernmaterial enthalten können, die mit einem Wandmaterial überzogen sind. So mikroverkapselte Substanzen können aufgrund ihrer Verkapselung häufig in mehr oder weniger rieselfähige Pulver überführt werden, und neben ihrer Verwendung als Latentwärmespeicher - in vielen weiteren Bereichen verwendet werden. Darüber hinaus können unangenehme Gerüche oder Geschmacke durch Verwendung von Mikrokapseln verdeckt und flüchtige Stoffe in der Mikrokapsel fixiert werden. Ferner bietet das Hüllmaterial der Mikrokapseln Schutz vor äußeren Einflüssen wie beispielsweise Licht, Luft und Feuchtigkeit.

Mikrokapseln können neben ihrer Verwendung in Latentwärmespeicher beispielsweise auch in Polier- und/oder Reinigungsmitteln, als Abstandshalter in Druckfarben, als Maßgröße für medizinisch-mikroskopische Untersuchungen, zur Herstellung selbstdurchschreibender Papiere usw. verwendet werden. Neben den Vollkugeln sind Mikrokapseln bekannt, die als Kernmaterial flüssige, feste oder gasförmige, in Wasser unlösliche oder im Wesentlichen unlösliche Stoffe enthalten können. Als Material für die Kapselwände sind beispielsweise Melamin-Formaldehyd-Harze, Polyurethan, Gelatine, Polyamide oder Polyharnstoffe gebräuchlich, wobei Mikrokapseln mit Kapselmaterialien aus Aminoplastharzen, vor allem Melamin-Formaldehyd-Harzen, aufgrund ihrer hohen Vernetzungsdichte von besonderem Interesse, insbesondere in Latentwärmespeicher, sind. Der Vorteil der Mikrokapseln mit Kapselwänden aus Melamin-Formaldehyd-Harzen liegt in ihrer hervorragenden Dichtigkeit, mechanischen Stabilität und Reproduzierbarkeit begründet.

So beschreiben die EP-A-0-383 358 und die DE-A-3 814 250 lichtempfindliche Materialien, welche durch Mikrokapseln geschützt sind, deren Wände aus Melamin-Formaldehyd-Harzen gebildet werden. Nachteilig an diesen Mikrokapseln aus Melamin-Formaldehyd-Harzen ist jedoch, dass sie - aufgrund verschiedener Gleichgewichtsreaktionen - neben dem Harz immer auch eine bestimmte Menge an freiem Formaldehyd enthalten bzw. immer auch eine bestimmte Menge an Formaldehyd während ihrer Herstellung, ihrer Weiterverarbeitung oder ihres Gebrauchs freisetzen.

Die Emission von Formaldehyd in Baustoffen, als Inhaltsstoff beispielsweise in Klebstoffsystemen wie Harnstoff-Formaldehyd-Harzleimen bei der Herstellung von Möbeln, Spanhölzern, Tischlerplatten, Sperrhölzern und sonstigen Holzwerkstoffen, aber auch in Mikrokapseln aus Melamin-Formaldehyd-Harz für unterschiedliche Anwendungsbereiche ist kann eine Ursache für die Schadstoffbelastung in Innenräumen sein. So kann Formaldehyd bei unsachgemäßer Anwendung beim Menschen Kontaktallergien sowie Promotoreffekte für Allergien hervorrufen, welche im Extremfall auch zu allergischer Kontaktdermatitis (Typ IV) und einem Kontakturtikaria (Typ I) führen können. Weiterhin kann Formaldehyd Haut-, Atemwegs- oder Augenreizungen verursachen. Formaldehyd ist in der MAK-Liste unter Abschnitt III-B "Stoffe mit begründetem Verdacht auf krebserzeugendes Potential" aufgeführt. Der MAK-Wert ist auf 0,5 ppm bzw. 0,6 mg/m³ festgesetzt. Die karzinogene Wirkung von Formaldehyd wurde in Tierversuchen bei Ratten und Mäusen bei hohen Konzentrationen nachgewiesen. Bei Bakterien, Insekten und bestimmten Pflanzen sowie menschlichen Zellkulturen ließen sich durch Exposition mit Formaldehyd darüber hinaus auch mutagene Wirkungen nachweisen. Untersuchungen bei empfindlichen Personen zeigen, dass bereits eine Beeinträchtigung des Wohlbefindens ab 0,05 ppm/qm in der Raumluft Formaldehyd auftritt.

Damit besteht ein grundsätzlicher Bedarf nach einer Reduktion der Exposition des Menschen mit Formaldehyd und damit auch nach einer Reduktion des Anteils an Formaldehydfreisetzung bei Verwendung entsprechender Baustoffe.

Um das überschüssige Formaldehyd aus Mikrokapseln mit beispielsweise Melamin-Formaldehyd-Harzwänden zu entfernen, können während der Herstellung der Mikrokapseln Harnstoff oder Amine als sog. Formaldehydfänger zugesetzt werden.

So beschreiben beispielsweise die EP-A-0 026 914 und die EP-A-0 218 887 Kapseln aus Melamin-Formaldehyd-Harzen, die sich durch eine gleichmäßige Kapselgröße und eine hohe Dichtigkeit auszeichnen, bei denen das Formaldehyd im Anschluss an die Härtung mit Ethylenharnstoff und/oder Melamin als Formaldehydfänger gebunden wird. Auch die EP-A-0 319 337 und die US-A-4 918 317 beschreiben Verfahren, in welchen Harnstoff gegen Ende der Härtung zugesetzt wird, um überschüssiges Formaldehyd zu entfernen.

Nachteilig an dieser bekannten Verfahrensweise zur Reduktion des Formaldehyds mittels Harnstoff oder Aminen ist, dass die resultierenden Kapseln einen durch den Harnstoff oder das Amin bedingten unangenehmen Geruch aufweisen, und aufgrund des gebildeten Urotropins und dem Fachmann bekannten Mannich-Reaktionsprodukten bei der thermischer Behandlung (z.B. bei dem Sprühtrocknen) verstärkt zu der Rückspaltung von freiem Formaldehyd neigen.

EP 1 797 947 A offenbart ein Verfahren zur Herstellung von Mikrokapseln mit einer Polymerwand die mit Melamin-Formaldehyd vernetzt ist, wobei diese Kapseln mit Oxidationsmitteln behandelt werden.

Daher ist es eine Aufgabe der vorliegenden Erfindung, ein Verfahren zur Herstellung von Duroplastharzen bereitzustellen, bei dem der Aldehydgehalt, insbesondere der Formaldehydgehalt, reduziert ist. Insbesondere soll sich das Verfahren zur Reduktion von Formaldehyd für die Herstellung von Mikrokapseln oder Zusammensetzungen enthaltend Mikrokapseln mit Kapselwänden umfassend Duroplastharze, insbesondere Pheno- und/oder Aminoplastharze wie Harnstoff-, Formaldehyd- oder Melamin-Formaldehyd-Harze, eignen. Die Mikrokapseln sollen möglichst sowohl bei ihrer Herstellung als auch bei ihrer späteren Verwendung im Vergleich zu bekannten Mikrokapseln weniger Formaldehyd emittieren und dennoch möglichst gute anwendungstechnische Eigenschaften aufweisen. Gemäß einem weiteren Aspekt der vorliegenden Erfindung soll daher ein allgemeines - d.h. von dem Aldehydgehalt der Mikrokapseln unabhängiges - Verfahren bereitgestellt werden, das die Herstellung möglichst homogener und gut dispergierbarer Mikrokapseln erlaubt.

Gelöst wird diese Aufgabe dadurch, dass die Herstellung von Duroplastharzen zumindest zum Teil in Anwesenheit von Oxidationsmitteln durchgeführt wird. Dazu kann der verwendeten Harzzusammensetzung ein Oxidationsmittel, z.B. Wasserstoffperoxid hinzugefügt werden. Insbesondere sind Mikrokapseln bevorzugt, deren Wandmaterial noch vor der Aushärtung, nämlich während oder nach der Ruhephase des Kapselbildungsprozesses, mit Oxidationsmitteln behandelt wurde. Ergänzend ist die Zugabe von Kieselsäure bzw. Kieselsäurederivaten vorgesehen.

Es hat sich gezeigt, dass es von besonderem Vorteil ist, das Oxidationsmittel frühestens dann der Harzzusammensetzung hinzuzufügen, wenn die Kapselwand bereits stabil ausgebildet ist. Dabei wird als "stabiles" Wandmaterial dasjenige Wandmaterial verstanden, das das durch die Kapsel eingeschlossene Kernmaterial (z.B. Duftöle) unter üblichen Lagerbedingungen der Slurry zurückhält. "Stabil" ist somit ein Wandmaterial dann, wenn das Kernmaterial in der Kapsel gehalten wird (und nicht zerfließt) bzw. in der Slurry an einem Zusammenschluss ("koaleszieren") gehindert wird.

Übliche Lagerbedingungen der Slurry sind dabei beispielsweise Temperaturen von +5 bis +25 °C. Die Ausbildung eines stabilen Wandmaterials setzt in der Regel voraus, dass während des Herstellungsprozesses eine ausreichende lange Reaktionszeit ("Ruhephase") für die Ausbildung des Wandmaterials zur Verfügung steht. Es ist von besonderem Vorteil, das Oxidationsmittel erst nach Abschluss dieser Phase hinzuzufügen.. Wenn das Wandmaterial bereits vorher ausreichend stabil ist, kann es auch bereits vorher hinzugefügt werden.

Unter der "Ruhephase" versteht der Fachmann denjenigen Zeitraum, der zwischen den Phasen der "Kapselpräformierung" und der "Kapselhärtung" liegt. Die Ruhephase kann vorzugsweise mindestens 30, mindestens 40, mindestens 50 oder mindestens 60 Minuten betragen. Dies gilt insbesondere bei einer Temperatur von 20 bis 50°C. Der Zeitraum der Ruhephase ist jedoch abhängig von den konkreten Bedingungen. Wesentlich ist, wie bereits ausgeführt, dass der Zeitraum der Ruhephase so lang ist, dass ein ausreichend stabiles Wandmaterial vorliegt.

Als Oxidationsmittel kommen alle gängigen Oxidationsmittel in Frage, die das Redoxpotential besitzen, Formaldehyd und verwandte reaktive Aldehyde in Karbonsäuren oder - letztendlich - Kohlendioxid zu überführen. Dazu gehören z.B. Perverbindungen, Persäuren, Kaliumpermanganat (KMn04), Ozon, NaOCI, anorganische Chlorate oder -perchlorate usw. Wasserstoffperoxid ist jedoch besonders bevorzugt, da es leicht verfügbar, günstig im Preis und vor allem effizient ist und keine schädigende Wirkung auf das Kapselsystem ausübt.

Ein weiterer Vorteil in der erfindungsgemäßen Verwendung von Oxidationsmitteln ist die durch die damit einhergehende Säurebildung erreichte Absenkung des pH Werts des Reaktionsansatzes, was im Sinne eines katalytischen Effekts zu einer Beschleunigung der für die Verkapselung erforderlichen Harzkondensation führt. Außerdem erhöht die durch die damit erreichte Oxidation eine Erhöhung der Hydrophilie der Mikrokapseln.

Die erfindungsgemäß mit beispielsweise Amino- und Phenoplastharzen herstellbaren Kern- Schale- Mikrokapseln zeigen aufgrund ihrer hohen Vernetzungsdichte, sowie der hohen thermischen Stabilität eine ausgesprochen hohe chemische und physikalische Resistenz.

In einer besonders vorteilhaften Ausführungsform der vorliegenden Erfindung handelt es sich bei der Erfindung um ein Verfahren zur Herstellung von Mikrokapsel-Zusammensetzungen, wobei die Mikrokapseln Kapselwände enthaltend Duroplastharze aufweisen.

Im Folgenden wird - soweit nichts anderes angegeben - unter dem Begriff "Mikrokapsel" eine Kapsel verstanden, welche durch Kondensation von Duroplastharzen, gegebenenfalls in Gegenwart eines Kernmaterials, hergestellt wird. Für die Kapselbildung selber sind dem Fachmann aus dem Stand der Technik verschiedene Ansätze bekannt (siehe unten).

Die Begriffe "Mikrokaspelzusammensetzung" oder "Zusammensetzung enthaltend Mikrokapseln" umfasst jede Zusammensetzung, die Mikrokapseln enthält. Diese Zusammensetzung kann einen beliebigen Aggregatzustand einnehmen und ein oder mehrere Phasen umfassen, beispielsweise flüssig oder fest sein, oder auch aus verschiedenen Phasen bestehen, beispielsweise als überwiegend trockenes Pulver oder aber als Dispersion vorliegen.

Das erfindungsgemäße Verfahren eignet sich sowohl zur Herstellung von Vollmikrokapseln, d.h. Mikrokapseln, die vollständig aus dem Harz bestehen, oder Mikrokapseln, welche ein von dem Harz unterschiedliches Kernmaterial umfassen.

Als Duroplastharze werden im vorliegenden Zusammenhang alle Kunststoffe verstanden, die durch eine irreversible Vernetzung über kovalente Bindungen (Kondensation) aus Oligomeren, Polymeren und/oder Monomeren entstehen. Teilweise werden auch die Rohstoffe selber als Duroplaste oder Duroplastharze bezeichnet. Die konkrete Begriffbedeutung - also ob der Rohstoff, oder aber das Kondensat gemeint ist - ergibt sich eindeutig für den Fachmann aus dem jeweiligen Kontext der Begriffsverwendung. Wichtige Vertreter der auch erfindungsgemäß einsetzbaren Duroplaste sind Aminoplastharze und Phenoplastharze.

Unter "Aminoplastharzen" - auch als Aminharze oder Amidharze bekannt - wird jede Zusammensetzung, einschließlich Ausgangs-, Zwischen- oder Endprodukt verstanden, die Kondensationsprodukte NH-haltiger Verbindungen und Carbonylverbindungen, insbesondere Aldehyde wie z.B. Formaldehyd, enthält. Beispiele dafür sind Harnstoffharze, Melaminharze, Urethanharze, Cyan- oder Dicyanamidharze, Anilinharze oder Sulfonamidharze sowie Kombinationen und Kokondensate davon.

Der Begriff "Phenoplaste" bezieht sich auf alle Zusammensetzungen (also Ausgangs-, Zwischen- oder Endprodukte), die Kondensationsprodukte einer Phenolkomponente (Phenol, Resorcin, Phloruglucin oder Kresol deren Derivate u.a.) mit Carbonylverbindungen, z.B. Aldehyden, insbesondere Formaldehyd, enthalten, wobei die Phenolkomponente vorzugsweise Phenol oder Phenolderivate (z.B. Arylphenol oder Alkylphenol) sein kann. Wichtig Beispiele von Phenoplasten sind die unter sauren Bedingungen zugänglichen Novolake und die unter alkalischen Reaktionsbedingungen erhältlichen Kondensationsprodukte der Resole, Resite und Resitole.

Aminoplastharze und Phenoplastharze können einzeln oder auch kombiniert verwendet werden (Cokondensate), so z.B. als Melamin-Formaldehydharz, Phenol-Formaldehydharz oder aber Melamin-Phenol-Formaldehydharz.

Die genaue Ausgestaltung des erfindungsgemäßen Verfahrens unterliegt keiner besonderen Beschränkung und es können alle bekannten Verfahren zur Herstellung von Duroplastharzen und/oder zur Herstellung von Mikrokapseln angewendet werden, sofern sie - wie von der Erfindung vorgesehen - in der Gegenwart oder unter Beteiligung von Oxidationsmitteln durchgeführt werden. In einer besonders bevorzugten Ausführungsform wird das erfindungsgemäße Verfahren zur Reduktion des Formaldehydsgehalts eingesetzt und setzt demnach die Verwendung Formaldehyd haltiger Duroplastharze voraus.

Verfahren zur Mikrokapselbildung sind beispielsweise in EP-A-0 974 394, EP-A-0 218 887, EP-A-1 246 693, EP-A-0 026 914 und EP-A-1 244 768 beschrieben, dessen diesbezügliche Offenbarung durch Bezugnahme in die vorliegende Erfindung eingeschlossen wird. Üblicherweise geht man so vor, dass man das Kernmaterial, falls verwendet, in einer wässrigen Lösung eines Schutzkolloids, die vorzugsweise einen sauren pH-Wert aufweist, zu feinen Tröpfchen emulgiert. Zu der vorgelegten Emulsion wird unter Durchmischen die wässrige Lösung beispielsweise des Melamin-Formaldehyd-Vorkondensates oder Melamin und Formaldehyd einzeln zur in-situ Polymerisation zugegeben. Dabei bilden sich Mikrokapseln aus. Nach Abschluß der Zugabe wird die Kondensation zu Ende geführt.

Alternativ kann man die Kapseln präformieren und anschließend vorzugsweise unter Temperaturerhöhung die Kapselwand härten. Zur Aushärtung der Kapselwand wird der Ansatz häufig auf eine Temperatur von mindestens etwa 40 °C, vorzugsweise etwa 75 bis 95 °C, erwärmt.

Die letzte Verfahrensweise ist bevorzugt und wird im Folgenden nunmehr detailliert beschrieben.

Im Allgemeinen kann man das Verfahren zur Bildung von Mikrokapseln in zwei unterschiedliche Verfahrensschritte, nämlich einerseits die Kapselbildung, und andererseits die Kapselhärtung unterteilen.

### Kapselbildung (Kapselpräformierung)

Falls die erfindungsgemäß herzustellende Mikrokapsel ein Kernmaterial umfassen soll, wird das erfindungsgemäße Verfahren vorzugsweise so durchgeführt, dass zunächst das einzukapselnde Kernmaterial zu feinen Tröpfchen emulgiert wird.

Das erfindungsgemäß einzukapselnde Material, welches anschließend den Kern der Mikrokapseln bildet, unterliegt grundsätzlich keiner Beschränkung. Vorzugsweise aber sind es hydrophobe Substanzen. Es kann beispielsweise ausgewählt werden aus der Gruppe bestehend aus flüssigen, festen oder gasförmigen, in Wasser unlöslichen bis im Wesentlichen ungelösten Stoffen, insbesondere Flüssigkeiten wie Alkylnaphthalinen; partiell hydrierte Terphenylen; aromatische Kohlenwasserstoffen wie Xylol, Toluol, Dodecylbenzol; aliphatische Kohlenwasserstoffen wie Benzin und Mineralöl; Chlorparaffinen; Fluorkohlenwasserstoffen; natürlichen Ölen wie Erdnussöl und Sojaöl; Klebstoffen; Aromastoffen; Parfumölen; Monomeren wie Acryl- oder Methacrylsäureester und Styrol; Wirkstoffen wie Pflanzenschutzmitteln und pharmazeutische Wirkstoffen; roter Phosphor; anorganischen und organischen Pigmenten wie Eisenoxidpigmente; und Farbbildnern. Weitere geeignete Materialien zum Verkapseln sind beispielsweise Duft- oder Riechstoffe, welche beispielsweise in der EP-B-1 244 768 beschrieben sind und dessen gesamte diesbezügliche Offenbarung in den Absätzen [0013] bis [0015] in die vorliegende Erfindung eingeschlossen ist.

Falls eine Vollmikrokapsel, d.h. eine Mikrokapsel ohne Kernmaterial, hergestellt werden soll, so wird in dem erfindungsgemäßen Verfahren selbstredend auf die Verwendung eines Kernmaterials verzichtet.

Das Emulgieren des einzukapselnden Kernmaterials unterliegt grundsätzlich keiner besonderen Beschränkung und es können alle Verfahrensweisen, welche geeignet sind, entsprechende Emulsionen herzustellen, verwendet werden. Vorzugsweise erfolgt das Emulgieren in einem wässrigen Milieu, insbesondere in einer wässrigen Lösung oder Dispersion des einzukapselnden Kernmaterials. Dabei ist es bevorzugt, dass das wässrige Milieu neben dem zu emulgierenden Kernmaterial ein Schutzkolloid umfasst.

Als Schutzkolloide sind insbesondere Sulfonsäuregruppen-tragende Polymere geeignet. Mögliche Schutzkolloide sind beispielsweise in der europäischen Patentschrift EP 0 978 312 B2 offenbart.

Das Emulgieren des gegebenenfalls zu verwendenden Kernmaterials erfolgt vorzugsweise in einem Bereich des pH-Werts von 2 bis 7,0, besonders bevorzugt 2,5 bis 7,0, speziell 3,0 bis 6,5. Der pH-Wert in der wässrigen Phase kann mit Säuren, wie Schwefelsäure, Salzsäure, Salpetersäure, Phosphorsäure, Oxalsäure oder vorzugsweise Ameisensäure oder bei saurer wässriger Phase mit Natronlauge eingestellt werden. Der Beginn der Trübung, d.h. die Ausfällung des Melamin-Formaldehyd-Kondensates ist vom Vorkondensat abhängig, so dass es für die Bildung der Mikrokapseln aus verschiedenen Vorkondensaten etwas unterschiedliche optimale pH-Werte gibt.

Die Dispergierung des hydrophoben Materials erfolgt in bekannter Weise, beispielsweise durch Homogenisier- oder Dispergiervorrichtungen, wobei diese Vorrichtungen mit oder ohne Zwangsdurchlaufvorrichtung versehen sein können. Die Kapselgröße kann dabei über die Umdrehungszahl der Dispergier- oder Homogenisiervorrichtung und/oder mit Hilfe der Konzentration des Schutzkolloids gesteuert werden. Dabei nimmt mit Erhöhung der Umdrehungszahl im Allgemeinen die Größe der dispergierten Teilchen ab. Mit steigender Viskosität der wässrigen Phase oder mit fallender Viskosität des Kernmaterials nehmen im Allgemeinen die Tröpfchengröße und damit die Größe der Kapseln ab. Die Kapselgröße kann damit auch über die Konzentration des Sulfonsäuregruppen tragenden Polymers bzw. über dessen Molekulargewicht gesteuert werden, da hierdurch die Viskosität der wässrigen kontinuierlichen Phase innerhalb gewisser Grenzen variiert werden kann.

Bei kontinuierlich arbeitenden Vorrichtungen mit Zwangsdurchlauf ist es vorteilhaft, die Emulsion mehrmals durch das Scherfeld zu schicken.

Zu der vorgelegten Emulsion wird bei Temperaturen von vorzugsweise 5 bis 80 °C, besonders bevorzugt 10 bis 70 °C, insbesondere 15 bis 60 °C, speziell 20 bis 50 °C, unter Durchmischen die wässrige Lösung des Kapselwandmaterials im Allgemeinen als Melamin-Formaldehyd-Vorkondensat kontinuierlich oder in Portionen zugegeben.

### Ruhephase

Um die Bildung einer stabilen Wand zu ermöglichen, ist noch vor der eigentlichen Aushärtephase (siehe unten) eine Ruhephase vorgesehen, die mehrere Minuten bis zu einigen Stunden betragen kann.

In einer bevorzugten Ausführungsform eignen sich als Ausgangsstoff für das Wandmaterial Kondensationsprodukte von Melamin bzw. Melaminderivaten mit Formaldehyd. Dabei beträgt das Verhältnis von Melamin oder Melaminderivat zu Formaldehyd vorzugsweise 1 : 1,5 bis 1 : 6, besonders bevorzugt 1 : 2,0 bis 1 : 6, insbesondere 1 : 3 bis 1 : 6. Werden Melaminderivate verwendet, so handelt es sich vorzugsweise um N-Alkylolmelaminverbindungen oder deren Alkylether, insbesondere C₁-C₄-funktionalisierte Verbindungen, beispielsweise Methyl- oder Ethylether. Die für das erfindungsgemäße Verfahren verwendeten Harze müssen mit Wasser in jedem Verhältnis mischbar sein, ohne eine Trübung zu erzeugen. Aus diesen Gründen sind die Ether der Methylolmelamine besonders bevorzugt.

Die Herstellung der Ausgangsstoffe Melamin bzw. der Melaminderivate mit Formaldehyd zu Vorkondensaten ist dem Fachmann an sich bekannt. Die Auskondensation der Harze erfolgt bei pH-Werten von 3,0 bis 6,5, vorzugsweise von 3,5 bis 5,5. Der pH-Wert in der wässrigen Phase kann mit Säuren, vorzugsweise mit Ameisensäure eingestellt werden. Die Art der Ausfällung des Melamin-Formaldehyd-Harzes ist etwas vom Harz abhängig, so dass es für die Bildung der Mikrokapseln aus den verschiedenen Harzen etwas unterschiedliche optimale pH-Werte und/oder Temperaturen gibt, welche der Fachmann jedoch anhand von Routineversuchen ermitteln kann.

Darüber hinaus kann das Kapselwandmaterial beispielsweise auch durch eine in-situ Polymerisation von Melamin mit Formaldehyd gebildet werden.

### Kapselhärtung

Wenn die dispergierten Tröpfchen vom Wandmaterial umhüllt sind, erfolgt die Aushärtung der Kapseln durch das Erzeugen turbulenter Strömungen jeglicher Art, vorzugsweise unter Rühren mit normalen Rührern, wie Ankerrührer, Propeller- oder Impellerrührer. Sollten höhere Scherkräfte als durch die vorstehend genannten Rührer auf das Kapselmaterial ausgeübt werden, besteht die Gefahr, dass die Kapseln im Scherfeld wegen der hohen Scherenergie aufgebrochen werden. Die Kapselbildung und die Kapselgröße kann unter einem Lichtmikroskop kontrolliert werden, da die noch nicht verkapselten Öltröpfchen unter dem Deckglas auf dem Objektträger rasch koagulieren. Sind die Tröpfchen stabilisiert, hat sich bereits eine feste Wand um diese herum abgeschieden. Die für den Einzelfall optimalen Bedingungen, wie Temperatur, pH-Wert und die Art der Rührgeometrie können anhand von Routineversuchen leicht ermittelt werden.

Die Aushärtung der Hülle der Mikrokapsel erfolgt vorzugsweise unter Erhöhung der Temperatur. Die Aushärtung der Kapselwand ist bereits bei Temperaturen von 40 °C oder mehr zu beobachten, bevorzugt sind Temperaturen oberhalb von 40 °C, nämlich 55 °C und insbesondere 65 °C als untere Grenze des Temperaturbereichs. Da es sich um eine wässrige Dispersion handelt, soll die Härtung bis 100 °C, bevorzugt 90 °C als obere Temperaturgrenze durchgeführt werden. Je nach pH-Wert der Dispersion erfolgt die Härtung unterschiedlich rasch, wobei Dispersionen bei niedrigeren pH-Werten zwischen 3 und 5 optimal im Temperaturbereich von 65 bis 85 °C aushärten. Oberhalb von 40°C ist jedoch auch im nur schwach sauren bis neutralen pH-Bereich die Härtung deutlich zu beobachten.

Die Härtung kann über mehrere Stunden erfolgen. Bevorzugt ist mindestens eine halbe Stunde, besonders bevorzugt 1 bis 2 Stunden. Die Aushärtung kann aber auch drei Stunden und mehr betragen. Die dazu gewählte Temperatur liegt vorzugsweise bei über 60, über 80 oder etwa bei 90°C.

Das Erwärmen der Kapseldispersion auf die Härtungstemperatur kann auf verschiedene Weise erfolgen. So kann die Erwärmung beispielsweise durch Injizierung von heißem Wasserdampf in die Kapseldispersion erfolgen.

Der zur Härtung erforderliche pH-Wert in der wässrigen Phase kann mit Säuren, wie Schwefelsäure, Salzsäure, Salpetersäure, Phosphorsäure, Oxalsäure oder vorzugsweise Ameisensäure oder bei saurer wässriger Phase mit Basen eingestellt werden.

Gemäß der vorliegenden Erfindung wird das Verfahren der Duroplastharzbildung für die Kapselherstellung zumindest teilweise in Gegenwart von Oxidationsmitteln, insbesondere von Wasserstoffperoxid durchgeführt. Dies hat zum einen den Vorteil, dass - sofern Formaldehyd-haltige Rohstoffe eingesetzt werden - wesentliche Anteile des sonst überschüssigen Formaldehyds entfernt werden und somit der Formaldehydgehalt sinkt. Zum anderen aber hat es sich überraschenderweise herausgestellt, dass die mit dem erfindungsgemäßen Verfahren hergestellten Mikrokapseln eine deutlich verbesserte Homogenität aufweisen und daher deutlich besser dispergierbar sind. Dies ist vermutlich darauf zurückzuführen, dass die Anwesenheit des Oxidationsmittels zu einer Oxidation von auf der Kapseloberfläche befindlichen Molekülen führt. Durch dieses "Wegbrennen" organischer Oberflächenmoleküle werden eine einheitlichere Größenverteilung und eine einheitlichere Oberflächenstruktur der Mikrokapseln erreicht. Außerdem wird die Oberflächenenergie der Mikrokapseln vorteilhaft beeinflusst. Dies wiederum führt u.a. zu einer verminderten Agglomeration der Kapseln zu größeren Aggregaten, und somit zu einer Mikrokapsel-Zusammensetzung mit einer verbesserten Dispergierbarkeit. Diese kann beispielsweise quantifiziert werden durch die Anzahl von Agglomeraten pro definierter Flächeneinheit.

Es hat sich des weiteren herausgestellt, dass eine Mikrokapsel-Zusammensetzung mit einer gegenüber den üblichen Kapselzusammensetzungen geringeren Agglomeratneigung sowie einem niedrigeren Agglomeratgehalt auch dann erreicht werden kann, wenn die Kondensation und/oder Mikrokapselbildung wenigstens zum Teil in Anwesenheit von Kieselsäure bzw. Kieselsäurederivaten erfolgt. In dieser Ausführungsform der erfindungsgemäßen Kapseln kann sich die Kieselsäure bzw. das Kieselsäurederivat um die üblicherweise mit Resten des eingeschlossenen Kernmaterials (beispielsweise Ölen) bedeckten Mikrokapseln legen, und diese Reste somit absorbieren. Die Mikrokapseln nach dieser Ausführungsform sind demnach vorteilhafterweise mindestens zum Teil im wesentlichen vollständig mit einer Schicht (einem "Schirm) enthaltend Kieselsäure und/oder Kieselsäurederivat umgeben.

Es kann besonders vorteilhaft sein, hydrophile Kieselsäurederivate einzusetzen. Diese erleichtern nämlich die anderenfalls eher problematische Verkapselung teilweise wasserlöslicher Kernmaterialien. Des weiteren erhöhen sie nochmals die Dispergierbarkeit der Mikrokapseln. Es können jedoch auch hydrophobe Kieselsäuren oder Kieselsäurederivate eingesetzt werden. Die Wahl richtet sich u.a. nach dem Kapselwandmaterial, dem Kernmaterial und dem weiteren Verwendungszweck.

Im Sinne der Erfindung werden als Kieselsäuren alle Verbindungen der allgemeinen Formel (SiO₂)m • H₂0 verstanden. Kieselsäurederivate sind alle Verbindungen, die aus Kieselsäuren durch einfache Umsetzung oder einfache und/oder wenige Reaktionsschritte entstehen können. Ein Beispiel für ein Kieselsäurederivat ist ein Kieselsäureester, also das Umsetzungsprodukt einer Kieselsäure mit einem Alkohol.

In einer Ausführungsform der Erfindung werden insbesondere pyrogene Kieselsäuren oder -derivate eingesetzt. Dabei handelt es sich um meist hochdisperse Kieselsäureverbindungen, die durch Flammenhydrolyse hergestellt werden. Sie sind zunächst meist hydrophil und lassen sich über Nachbehandlungsschritte jedoch auch hydrophobisieren. Gemäß der Erfindung können beispielsweise mit organischen Chlorsilanen (z.B. mit Octamethylcyclotetrasiloxan, Polydimethylsiloxan, Methacrylsilan, Oktylsilan, Hexamethyldisilan, Hexadecylsilan, Hexamethyldisilan, oder Dimethyldichlorsilan) nachbehandelte pyrogene Kieselsäuren und/oder -derivate eingesetzt werden, die gegenüber den nicht-behandelten pyrogenen Kieselsäuren bzw. Kieselsäurederivaten eine erhöhte Hydrophobie aufweisen. Pyrogene Kieselsäuren und Kieselsäurederivate sind dem Fachmann beispielsweise als Handelsprodukte - CAB-O-Sil ® oder als Aerosil® bekannt.

Gemäß diesem Aspekt der Erfindung können die Mikrokapseln daher auch ohne die Zugabe eines Oxidationsmittels hergestellt werden, ohne dass damit ein Nachteil auf die erfindungsgemäß gewünschte Dispergierbarkeit verbunden wäre.

Es ist jedoch auch möglich, sowohl mindestens eine Kieselsäure bzw. ein Kieselsäurederivat als auch Wasserstoffperoxid zur Verbesserung der Dispergierbarkeit der Mikrokapseln oder der Verbesserung der Größenverteilung der Mikrokapselzusammensetzung hinzuzufügen. Die Kombination dieser Verbindungen kann vor allem dann günstig sein, wenn teilweise wasserlösliche Kernmaterialien verkapselt werden sollen.

Bei der Verwendung von Oxidationsmitteln (z.B. Wasserstoffperoxid) oder aber Kieselsäure bzw. eines Kieselsäurederivats ist - wie bereits ausgeführt - die Neigung zur Agglomeratbildung im Vergleich zu der Formaldehyd bzw. Kieselsäure freien Variante nach dem Stand der Technik deutlich erniedrigt. Vorzugsweise ist die erfindungsgemäße Dispersion im Wesentlichen agglomeratfrei. Der reduzierte Agglomeratgehalt der erfindungsgemäßen Mikrokapseldispersionen gegenüber bekannten Mikrokapseldispersionen kann durch eine mikroskopische Darstellung und anschließenden Quantifizierung der Agglomerate in der Dispersion bezogen auf eine Fläche gezeigt werden. So enthalten in dem weiter unten dargestellten Beispiel die erfindungsgemäßen Zusammensetzungen entweder keine Agglomerate oder aber etwa 1,6 bis 3,2 Agglomerate/mm² des Zählfensters, während die Zusammensetzung nach dem Stand der Technik 14 bis 17,2 Agglomerate/mm² des Zählfensters enthielt. Erfindungsgemäß werden somit möglichst Agglomeratgehalte von unter 14, vorzugsweise unter 12, unter 10 oder aber unter 4 Agglomeraten pro mm² des Zählfensters erreicht.

In einer Ausführungsform der Erfindung können 0,1 bis 20 Gew.-%, vorzugsweise 1 bis 15 Gew.-%, insbesondere 3 bis 10 Gew.-%, besonders bevorzugt 3 bis 5 Gew.-%, Wasserstoffperoxid, bezogen auf den Gesamtansatz für die Mikrokapselbildung, eingesetzt werden.

Die Kieselsäuren bzw. Kieselsäurederivate können in einem Anteil von 0,01 bis 20 Gew.-%, vorzugsweise 0, 05 bis 10 Gew.-%, insbesondere 0,1 bis 3 Gew.-%, besonders bevorzugt 0,1 bis 0, 5 Gew.-%, bezogen auf den Gesamtansatz für die Mikrokapselbildung, eingesetzt werden.

Besonders vorteilhaft ist die Verwendung von Wasserstoffperoxid zum Binden von freiem Formaldehyd, wobei unter Binden von freiem Formaldehyd verstanden wird, dass Formaldehyd durch die Oxidation gemäß folgender Reaktionsgleichung zersetzt wird.

CH₂O + H₂O₂ → HCOOH + H₂O

Durch die erfindungsgemäß vorgesehene Oxidation durch Wasserstoffperoxid bildet sich Ameisensäure, welche autokatalytisch den Kondensationsprozess, für die Ausbildung des Harzes vorantreibt, da die Kondensation durch Einstellung des pH-Wertes vorzugsweise im sauren Bereich von 3,5 bis 6,5 ausgelöst wird. Die Oxidation bis zur Ameisensäure ist vorteilhaft, da unter den beschriebenen Bedingungen damit kein CO₂ entsteht, das nämlich die Kapsel aufblähen würde. Gleichwohl können auch andere Oxidationsmittel verwendet werden.

Die durch die Oxidation von Formaldehyd erhältlichen erfindungsgemäßen Mikrokapseln-Zusammensetzungen weisen einen Restgehalt an Formaldehyd von vorzugsweise unter etwa 5000 bis etwa unter 300 ppm, unter etwa 3000 ppm oder unter etwa 1000 ppm auf. In einer besonders bevorzugten Ausführungsform enthält die erfindungsgemäße Mikrokapselzusammensetzung einen Formaldehyd-Gehalt von unter etwa 800 bis unter 300 ppm. Diese Angaben beziehen sich jeweils auf den Formaldehydgehalt gemessen nach der sog. Acetylaceton-Methode nach EN ISO 14184, in welcher das freie und extrahierbare Formaldehyd gemessen wird. Der Formaldehydgehalt kann leicht variieren, je nachdem, ob eine Dispersion (slurry) oder aber ein getrocknetes Pulver vorliegt.

Die im Stand der Technik häufig verwendete Kaltwasserauszugsmethode nach DIN 16746 führt zu gemessenen Formaldehydkonzentrationen, die im allgemeinen etwa um einen Faktor 10 niedriger liegen als die mit der oben erwähnten EN ISO 14184 gemessenen Werte. De Kaltwasserauszugsmethode beruht auf der Umsetzung von Natriumsulfitlösung mit Formaldehyd und der Rückfiltration mit Jodlösung. Der gemessene Formaldehydgehalt bezieht sich auf die Gesamtmenge Mikrokapseldispersion.

Die Mikrokapseln werden nach dem Härtungsschritt im Allgemeinen in Form einer Mikrokapseldispersionen erhalten.

Die nach einer der vorstehend geschilderten Vorgehensweisen erhaltenen Mikrokapseldispersionen können anschließend in üblicher Weise sprühgetrocknet werden. Geeignete Schutzkolloide sind die vorstehend im Zusammenhang mit der Herstellung der Mikrokapseln genannten. Im Allgemeinen wird die wässrige Mikrokapseldispersion in einem Warmluftstrom zerstäubt, der im Gleich- oder Gegenstrom, vorzugsweise im Gleichstrom, mit dem Sprühnebel geführt wird. Die Eingangstemperatur des Warmluftstroms liegt üblicherweise im Bereich von 100 bis 200 °C, vorzugsweise 120 bis 160 °C, und die Ausgangstemperatur des Luftstroms liegt im Allgemeinen im Bereich von 30 bis 90 °C, vorzugsweise 60 bis 80 °C. Das Versprühen der wässrigen Mikrokapseldispersion kann beispielsweise mittels Ein- oder Mehrstoffdüsen oder über eine rotierende Scheibe erfolgen.

Die Abscheidung der sprühgetrockneten Mikrokapselzubereitungen erfolgt normalerweise unter Verwendung von Zyklonen oder Filterabscheidern. Die flüssigen oder sprühgetrockneten Mikrokapselzubereitungen können für die nachstehend genannten Zwecke verwendet werden.

### Mikrokapsel

Weiterer Gegenstand der vorliegenden Erfindung sind die durch das erfindungsgemäße Verfahren erhältlichen Mikrokapseln.

Darüber hinaus betrifft die vorliegende Erfindung Mikrokapseln mit Kapselwänden aus Duroplastharzen, vorzugsweise Aminoplast- oder Phenoplastharzen, welche einen Gehalt an Formaldehyd von vorzugsweise unter etwa 3000 ppm bis unter etwa 300 ppm, unter etwa 2000 ppm, unter etwa 1000 ppm oder aber von unter etwa 800 bis 300 ppm (jeweils gemessen nach der Acetylaceton-Methode gemäß EN ISO 14184) aufweisen.

Diese Mikrokapseln sind beispielsweise mit dem oben beschriebenen Verfahren erhältlich, so dass auf obige Ausführungen hinsichtlich des Verfahrens verwiesen wird.

In einer besonderen Ausführungsform der vorliegenden Erfindung umfassen die erfindungsgemäßen Mikrokapseln neben ggf. der Harzkomponente kein weiteres Amin, Harnstoff oder Harnstoffderivat. In diesem Sinne sind sie aminfrei.

Der mittlere Durchmesser der erfindungsgemäßen Mikrokapseln liegt vorzugsweise im Bereich von 0,1 bis 100, besonders bevorzugt zwischen 3 bis 40, insbesondere bevorzugt zwischen 6 und 10 µm. Das Verhältnis von Wandmaterial zu Kern der erfindungsgemäßen Mikrokapseln liegt vorzugsweise im Bereich von 5 zu 95 bis 25 zu 75. Jedoch ist die Herstellung jedes Verhältnisses bis hin zu reinem Wandmaterial in Form von Vollkörpern in diesem Größenordnungsbereich auch möglich.

Darüber hinaus betrifft die vorliegende Erfindung die Verwendung der erfindungsgemäßen Mikrokapseln bzw. der durch das erfindungsgemäße Verfahren erhältlichen Mikrokapseln als PCM in Latentwärmespeicher, Polier- und/oder Wasch- und Reinigungsmitteln, im Bereich der Duftstoffindustrie, als Abstandshalter in Druckfarben, als Maßgröße für medizinisch-mikroskopische Untersuchungen, zur Herstellung selbstdurchschreibender Papiere sowie im Bereich der Landwirtschaft und der pharmazeutischen Industrie.

Durch das erfindungsgemäße Verfahren ist es möglich, den Restaldehydanteil in Mikrokapseln möglichst zu verringern. Die dabei gebildete Säure sorgt aufgrund der erforderlichen sauren Kondensationsumgebung für eine automatische Einstellung des pH-Wertes in dem erforderlichen pH-Wertbereich, so dass das erfindungsgemäße Verfahren autokatalytisch abläuft.

Die dabei erhältlichen Mikrokapseln sind frei von zugesetzten Aminen, welche üblicherweise einen unangenehmen Geruch und bei thermischer Belastung zu verstärkter Rückspaltung in die Ausgangsverbindungen der Aminoplastharze führen.

Die vorliegende Erfindung wird anhand der nachfolgenden Beispiele näher erläutert, ist jedoch keinesfalls auf die dargestellten Ausführungsformen beschränkt.

### I. Beispiele zur Herstellung Formaldehyd reduzierter Mikrokapseln

Die angegebenen Formaldehydrestwerte wurden mittels Acetylaceton-Methode (EN ISO 14184) bestimmt.

### Beispiel 3.1

Es wird verfahren wie in Beispiel 1.1. Die Formaldehydoxidation wird mit 1,0% Wasserstoffperoxid vor der Aushärtung begonnen und die Kapseln werden 3 Stunden bei 90°C ausgehärtet.

Die Mikrokapseldispersion weist einen Formaldehydrestwert von etwa 4300 ppm auf. Das sprühgetrocknete Pulver weist einen Formaldehydrestwert von etwa 1500 ppm auf.

Nach der Kaltwassermethodik DIN 16746 entspricht das einem Formaldehydgehalt von etwa 430 ppm in der Dispersion und von etwa 150 ppm in dem Pulver.

### Beispiel 3.2

Es wird verfahren wie in Beispiel 3.1. Der Ansatz wird zum Abschluss mit Ammoniak neutralisiert.

Die Mikrokapseldispersion weist einen Formaldehydrestwert von etwa 500 ppm auf. Das sprühgetrocknete Pulver weist einen Formaldehydrestwert von etwa 1700 ppm auf.

Nach der Kaltwassermethodik DIN 16746 entspricht das einem Formaldehydgehalt von etwa 50 ppm in der Dispersion und von etwa 170 ppm in dem Pulver.

### Beispiel 4.1

Es wird verfahren wie in Beispiel 3.1. Die Formaldehydoxidation wird mit 1,6 % Wasserstoffperoxid durchgeführt.

Die Mikrokapseldispersion weist einen Formaldehydrestwert von etwa 600 ppm auf. Das sprühgetrocknete Pulver weist einen Formaldehydrestwert von etwa 1000 ppm auf.

Nach der Kaltwassermethodik DIN 16746 entspricht das einem Formaldehydgehalt von etwa 60 ppm in der Dispersion und von etwa 100 ppm in dem Pulver.

### Beispiel 4.2

Es wird verfahren wie in Beispiel 4.1. Der Ansatz wird zum Abschluss mit Ammoniak neutralisiert.

Die Mikrokapseldispersion weist einen Formaldehydrestwert von etwa 600 ppm auf. Das sprühgetrocknete Pulver weist einen Formaldehydrestwert von etwa 1200 ppm auf.

Nach der Kaltwassermethodik DIN 16746 entspricht das einem Formaldehydgehalt von etwa 60 ppm in der Dispersion und von etwa 120 ppm in dem Pulver.

### Beispiel 5 Vergleich mit dem Stand der Technik

Das europäische Patent EP 0 978 312 B2 beschreibt ein Verfahren zur Herstellung von Mikrokapseln aus Formaldehydarmen Melamin Formaldehydharzen. Die Formaldehydgehalte der Mikrokapseln werden mit der Kaltwassermethodik nach DIN 16746 bemessen.

Die dort beschriebenen Mikrokapseln weisen einen Formaldehydgehalt von 0,62 bis 0,78 % auf (also 6200 bis 7800 ppm). Nach der oben erwähnten Acetylacetonmethode würden sich deutlich höhere Formaldehydgehalte ergeben.

### II. Beispiele zur Herstellung von Mikrokapseln mit verringertem Agglomeratanteil

### Beispiel 1

2 gr. Kapseln wurden in ein 50 ml Becherglas eingewogen und mit 8 g Wasser versetzt. Die Mischung wurde auf einem Magnetrührer (IKAMAG RCT) 10 Minuten auf höchster Stufe mit einem 30 mm Magnetfisch gerührt und danach mit 10 ml Wasser verdünnt.

Die Beurteilung der Dispergierbarkeit erfolgte anhand einer mikroskopischen Analyse und Quantifizierung im Zählfenster bei einer 200-fachen Vergrößerung erkennbaren Agglomerats.

### Ergebnis:

Bei der Kontrolle sind auf einer Fläche von 0,64 mm² (800x800 µm) des im Mikroskop eingesetzten Zählfensters 9 bis 11 Agglomerate enthalten.

Eine Probe mit 1,6 % Wasserstoffperoxid und 0,5 % Aerosil (hydrophile Aerosiltypen BET Wert 90 - 380 qm/g, bevorzugt 150 - 250 qm/g, z.B. Aerosil 150, 200 und 380) enthält auf der gleichen Fläche 1-2 Agglomerate.

Proben mit 1,6 % Wasserstoffperoxid oder 0,5 % Cab-O-Sil sind Agglomerat frei.

### III. Untersuchung zur Stabilität der Kapselwand während des Verkapslungsprozesses

Zur Darstellung der ausreichenden Stabilität des sich während des Verkapslungsprozesses ausbildenden Kapselwandmaterials wurden zu unterschiedlichen Zeitpunkten bei fortschreitender Ruhepause Proben aus der Slurry entnommen, und diese einer Zentrifugation zugeführt. In einer anschließenden mikroskopischen Beurteilung der Slurry wurde untersucht, wann sich eine ausreichend stabile Wand ausgebildet hatte. Ausreichend stabil ist eine Wand dann, wenn sie keine wesentlichen Mengen Kernmaterial unter üblichen Lagerbedingungen mehr freigibt. Der Fachmann weiß allerdings, dass herkömmliche Diffusionsprozesse als Funktion von T,p,c, Molekülgröße, Molekülgestalt, Anteil funktionelle Gruppen usw. immer gegeben sind.

### Zentrifugation:

Die Verkapselung erfolgt wie in den Beispielen I (siehe oben) angegeben. Als Kernmaterial wurde Diethylphthalat (DEP) gewählt. Um nach der Zentrifugation die Phasen besser voneinander unterscheiden zu können, wurde das Kernmaterial rot angefärbt.

Nach dem Erreichen der gewünschten Teilchengröße (10-15µm) im Verkapslungsprozess wurden im Abstand von 10 Minuten Proben gezogen. Dazu wurden jeweils 30g der Slurry entnommen, mit wenigen Tropfen Natronlauge der pH-Wert erhöht und die Probe anschließend in einem Eisbad abgekühlt. Diese Nachbehandlung wurde durchgeführt um die Reaktion des MF-Harzes in der Emulsion zu stoppen.

Die Proben wurden wie folgt entnommen:

| | |
|---|---|
| 1470-03-1 | direkt nach Teilchenbildung |
| 1470-03-2 | nach 10min Ruhephase |
| 1470-03-3 | nach 20min Ruhephase |
| 1470-03-4 | nach 30min Ruhephase |
| 1470-03-5 | nach 40min Ruhephase |
| 1470-03-6 | nach 50min Ruhephase |
| 1470-03-7 | nach 60min Ruhephase |

Von jeder Probe wurden 1,5ml für 60min bei 15000Upm zentrifugiert (Zentrifuge: Biofuge primo, Hersteller Heraeus). Nach der Zentrifugation war zu beobachten, dass sich in den Proben 1470-03-1 bis 470-03-4 freies DEP am Boden des Gefäßes befindet (Dichte DEP: 1,12g/cm³). Mit zunehmenden Ruhephasen verringerte sich dabei der Anteil des freien Kernmaterials. In den Proben 1470-03-5 bis 1470-03-8 war hingegen kein freies DEP mehr zu erkennen.

Daraus kann geschlossen werden, dass die Teilchen nach etwa 30 - 40 minütiger Ruhephase eine derart stabile Wand ausgebildet haben, dass die Tröpfchen des Kernmaterials auch unter Krafteinwirkung nicht mehr koaleszieren können.

### Mikroskopische Beurteilung:

Zur mikroskopischen Beurteilung der Kapseln wurden zur gleichen Zeit wie für die Zentrifugation Proben aus dem Reaktionsgefäß der Verkapselung entnommen. Es wurde direkt ein dünner Aufstrich auf einen Objektträger gebracht, ohne die Probe vorzubehandeln. Der Aufstrich wurde bei Raumtemperatur getrocknet und anschließend unter dem Mikroskop beurteilt.

So konnte folgender Ablauf der Kapselwandbildung hergeleitet werden:

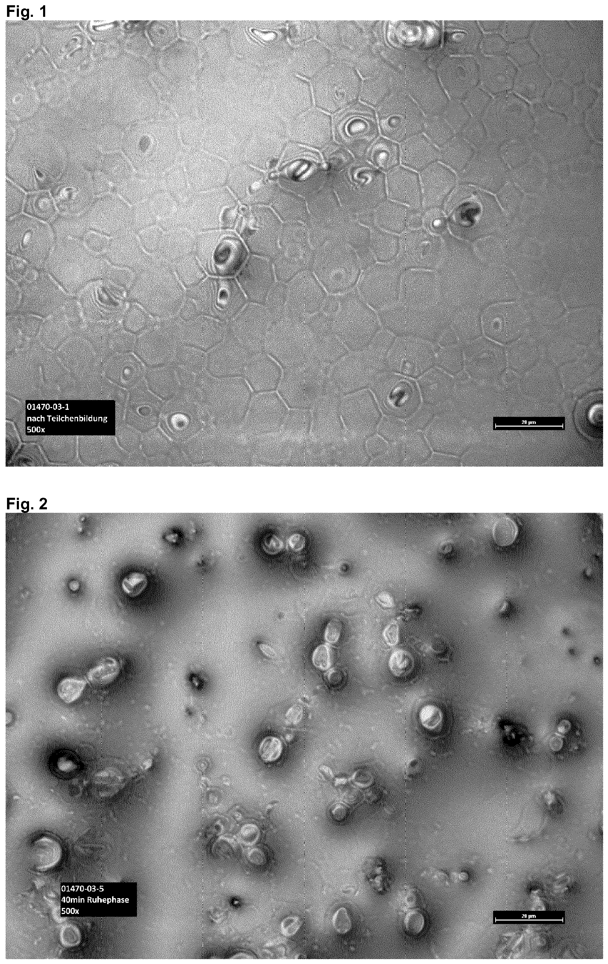

### 1470-03-1 (direkt nach Teilchenbildung): Siehe Fig. 1

Es ist zu erkennen, dass sich eine wandähnliche Struktur gebildet hat, die sich im trockenen Zustand als wabenartige Struktur abbildet. Diese besitzt allerdings nicht die Stabilität, die Öl-Tröpfchen am Zerfließen bzw. Zusammenfließen zu hindern. Der Objektträger ist von einer durchgehenden Öl-Schicht benetzt.

In den ersten 20 Minuten der Ruhephase (Probe 01470-03-3) ist keine Veränderung im System zu erkennen.

Nach 30 Minuten (Probe 01470-03-4) kann beobachtet werden, dass die wabenartige Struktur an Stabilität gewonnen hat, da vereinzelt Öltröpchen am Zerfließen gehindert werden.

### 1470-03-5 (40min Ruhephase): Siehe Fig. 2

Nach 40 Minuten (01470-03-5) wird die Kapselwand nicht mehr zu einer wabenartigen Struktur zusammengedrückt (Figur 2). Die Teilchen verbleiben im Wesentlichen zunehmend in einer runden Form. Das Kernmaterial ist im Wesentlichen in der sich ausgebildete Kapsel eingeschlossen.

## Patentansprüche

1. Mikrokapsel-Zusammensetzung enthaltend ein Kernmaterial, erhältlich durch die Kondensation von Duroplastharzen und anschließender Bildung von Mikrokapseln unter Verwendung von Aldehyden, vorzugsweise Formaldehyd, wobei das Wandmaterial der Kapsel vor der Aushärtung des Wandmaterials mit einem Oxidationsmittel behandelt wurde, **dadurch gekennzeichnet, dass** das Oxidationsmittel frühestens dann zugesetzt wird, wenn die Kapselwand bereits stabil ausgebildet ist, d.h. das Kernmaterial koalesziert nicht bei Temperaturen zwischen 5 und 25° C.

2. Mikrokapsel-Zusammensetzung nach Anspruch 1, **dadurch gekennzeichnet, dass** das Oxidationsmittel in einem Zeitraum zugesetzt wird, der zwischen der Phase der Kapselpräformierung und der Phase der Kapselhärtung liegt.

3. Mikrokapsel-Zusammensetzung nach einem der vorherigen Ansprüche, **dadurch gekennzeichnet, dass** es sich bei dem Oxidationsmittel um Wasserstoffperoxid handelt.

4. Mikrokapsel-Zusammensetzung nach einem der vorherigen Ansprüche, **dadurch gekennzeichnet, dass** das Oxidationsmittel in einer Menge von 0,1 bis 20 Gew.-%, vorzugsweise 1 bis 15 Gew.-%, insbesondere 1 bis 10 Gew.-%, besonders bevorzugt 1 bis 5 Gew.-% bezogen auf den Gesamtansatz für die Mikrokapselbildung eingesetzt wird.

5. Mikrokapsel-Zusammensetzung nach einem der vorherigen Ansprüche, **dadurch gekennzeichnet, dass** die Mikrokapseln einen Gehalt an Formaldehyd von
- unter 5000 bis unter 300 ppm, unter 3000 ppm oder unter 1000 ppm, besonders bevorzugt von unter 800 bis 300 ppm, gemessen nach der Acetylaceton-Methode gemäß EN ISO 14184 oder
- unter 500 bis unter 30 ppm, unter 300 ppm oder unter 100 ppm, besonders bevorzugt von unter 80 bis 30 ppm, gemessen nach der Kaltwassermethode gemäß DIN 16746
aufweisen.

6. Mikrokapsel-Zusammensetzung nach einem der vorherigen Ansprüche, **dadurch gekennzeichnet, dass** das Oxidationsmittel ersetzt oder ergänzt wird durch die Anwesenheit von Kieselsäure oder einem Kieselsäurederivat.

7. Mikrokapsel-Zusammensetzung nach Anspruch 6, **dadurch gekennzeichnet, dass** die Kondensation oder die Mikrokapselbildung wenigstens zum Teil in Anwesenheit von Kieselsäure bzw. Kieselsäurederivaten erfolgt.

8. Mikrokapsel-Zusammensetzung nach Anspruch 6 oder 7, **dadurch gekennzeichnet, dass** hydrophile Kieselsäureester eingesetzt werden.

9. Mikrokapsel-Zusammensetzung nach einem der vorherigen Ansprüche, **dadurch gekennzeichnet, dass** die Mikrokapseln über einem Zeitraum von 30 min bis zu 5 h, vorzugsweise von 1 bis 3 h, bei einer Temperatur über 60 °C und unter 100°C, vorzugsweise zwischen 80 °C und 90°C gehärtet wurden.

10. Verfahren zur Herstellung von Mikrokapseln enthaltend ein Kernmaterial, **gekennzeichnet durch** folgende Schritte:
a) Bereitstellen einer Harz-Zusammensetzung
b) Ausbildung eines Wandmaterials, das so stabil ausgebildet ist, dass das Kernmaterial bei 5 bis 25 °Cnicht koalesziert
c) Behandlung des Wandmaterials mit einem Oxidationsmittel
d) Aushärten des Wandmaterials,
wobei die Behandlung des Wandmaterials mit dem Oxidationsmittel in einem Zeitraum erfolgt, der zwischen der Ausbildung eines Wandmaterials, das so stabil ausgebildet ist, dass das Kernmaterial bei 5 bis 25 °C nicht koalesziert und dem Aushärten des Wandmaterials Phase der Kapselhärtung liegt.

11. Verfahren nach Anspruch 10, wobei das Oxidationsmittel Wasserstoffperoxid ist.

12. Verwendung der Mikrokapsel-Zusammensetzung nach einem der vorherigen Ansprüche 1 bis 9 als Phase Change Material (PCM) in Latentwärmespeicher, Polier- und/oder Wasch- und Reinigungsmitteln, im Bereich der Duftstoffindustrie, als Abstandshalter in Druckfarben, als Maßgröße für medizinisch-mikroskopische Untersuchungen, zur Herstellung selbstdurchschreibender Papiere sowie im Bereich der Landwirtschaft und der pharmazeutischen Industrie.

## Claims

1. Micro capsule composition containing a core material, available through condensing duroplast resins and the subsequent formation of micro capsules using aldehydes, preferably formaldehyde, wherein the wall material of the capsule was treated with an oxidation agent prior to curing the wall material, **characterised in that** the oxidation agent is added at the earliest when the capsule wall has already been formed and is stable, i.e. the core material does not coalesce at temperatures between 5 and 25°C.

2. Micro capsule composition according to claim 1, **characterised in that** the oxidation agent is admixed during a period that lies between the phase of capsule pre-formation and the phase of capsule curing.

3. Micro capsule composition according to one of the preceding claims, **characterised in that** the oxidation agent is hydrogen peroxide.

4. Micro capsule composition according to one of the preceding claims, **characterised in that** the oxidation agent is used in a quantity of 0.1 to 20 wt. %, preferably 1 to 15 wt. %, in particular 1 to 10 wt. %, more preferably 1 to 5 wt. % related to the total batch for the micro capsule formation.

5. Micro capsule composition according to one of the preceding claims, **characterised in that** the micro capsules have a formaldehyde content of
- less than 5000 to less than 300 ppm, less than 3000 ppm or less than 1000 ppm, more preferably of less than 800 to 300 ppm, measured according to the acetyl acetone method according to EN ISO 14184, or
- less than 500 to less than 30 ppm, less than 300 ppm or less than 100 ppm, more preferably less than 80 to 30 ppm, measured according to the cold water method according to DIN 16746.

6. Micro capsule composition according to one of the preceding claims, **characterised in that** the oxidation agent is replaced or supplemented with the presence of silicic acid or a silicic acid derivative.

7. Micro capsule composition according to claim 6, **characterised in that** the condensing or the micro capsule formation takes place at least in part in the presence of silicic acid or silicic acid derivatives.

8. Micro capsule composition according to claim 7 or 6, **characterised in that** hydrophilic silicic acid esters are used.

9. Micro capsule composition according to one of the preceding claims, **characterised in that** the micro capsules were cured over a period of 30 min to 5 h, preferably of 1 to 3 h, at a temperature above 60°C and below 100°C, preferably between 80°C and 90°C.

10. Method for producing micro capsules containing a core material, **characterised by** the following steps:
a) Provision of a resin composition
b) Formation of a wall material that is formed sufficiently stable so that a core material does not coalesce at 5 to 25°C
c) Treatment of the wall material with an oxidation agent
d) Curing of the wall material,
wherein the treatment of the wall material with the oxidation agent takes place during a period that lies between the formation of a wall material that is formed sufficiently stable so that the core material does not coalesce at 5 to 25°C and the curing of the wall material phase of capsule curing.

11. Method according to claim 10, wherein the oxidation agent is hydrogen peroxide.

12. Use of the micro capsule composition according to one of the preceding claims 1 to 9 as a phase change material (PCM) in latent heat storage, polishing agents and/or detergent and cleaning agents, in the field of perfume industry, as spacers in printing inks, as a measure for medical microscopic examinations, for the production of self-transcribing papers, as well as in the field of agriculture and pharmaceutical industry.

## Revendications

1. Composition de microcapsules contenant un matériau de noyau, pouvant être obtenu par condensation de résines thermodurcissables et formation consécutive de microcapsules au moyen d'aldéhydes, de préférence de formaldéhyde, le matériau de paroi de la capsule ayant été traité avec un agent d'oxydation avant le durcissement dudit matériau de paroi, **caractérisée en ce que** l'agent d'oxydation est ajouté au plus tôt quand la paroi de capsule a déjà été formée d'une manière stable, à savoir que le matériau de noyau ne coalesce pas à des températures comprises entre 5 et 25 °C.

2. Composition de microcapsules selon la revendication 1, **caractérisée en ce que** l'agent d'oxydation est ajouté dans une période qui se situe entre la phase de préformage de la capsule et la phase de durcissement de la capsule.

3. Composition de microcapsules selon l'une des revendications précédentes, **caractérisée en ce que** l'agent d'oxydation est du peroxyde d'hydrogène.

4. Composition de microcapsules selon l'une des revendications précédentes, **caractérisée en ce que** l'agent d'oxydation est utilisé dans une quantité de 0,1 à 20 % en poids, de préférence de 1 à 15 % en poids, en particulier de 1 à 10 % en poids, de manière particulièrement préférée de 1 à 5 % en poids par rapport à la composition totale pour la formation des microcapsules.

5. Composition de microcapsules selon l'une des revendications précédentes, **caractérisée en ce que** les microcapsules présentent une teneur en formaldéhyde de
- moins de 5000 à moins de 300 ppm, moins de 3000 ppm ou moins de 1000 ppm, de manière particulièrement préférée de moins de 800 à 300 ppm, mesurée d'après la méthode à l'acétylacétone selon EN ISO 14184 ou
- moins de 500 à moins de 30 ppm, moins de 300 ppm ou moins de 100 ppm, de manière particulièrement préférée de moins de 80 à 30 ppm, mesurée d'après la méthode à l'eau froide selon DIN 16746.

6. Composition de microcapsules selon l'une des revendications précédentes, **caractérisée en ce que** l'agent d'oxydation est remplacé ou complété par la présence d'acide silicique ou d'un dérivé d'acide silicique.

7. Composition de microcapsules selon la revendication 6, **caractérisée en ce que** la condensation ou la formation de microcapsules a lieu au moins en partie en présence d'acide silicique ou de dérivés d'acide silicique.

8. Composition de microcapsules selon la revendication 6 ou 7, **caractérisée en ce que** des esters d'acide silicique hydrophiles sont utilisés.

9. Composition de microcapsules selon l'une des revendications précédentes, **caractérisée en ce que** les microcapsules ont été durcies sur une période de 30 min à 5 h, de préférence de 1 à 3 h, à une température supérieure à 60 °C et inférieure à 100 °C, de préférence entre 80 °C et 90 °C.

10. Procédé de fabrication de microcapsules contenant un matériau de noyau, **caractérisé par** les étapes suivantes :
a) mise à disposition d'une composition de résine
b) formation d'un matériau de paroi qui est assez stable pour que le matériau de noyau ne coalesce pas entre 5 et 25 °C
c) traitement du matériau de paroi avec un agent d'oxydation
c) durcissement du matériau de paroi,
le traitement du matériau de paroi avec l'agent d'oxydation ayant lieu dans une période qui se situe entre la formation d'un matériau de paroi assez stable pour que le matériau de noyau ne coalesce pas entre 5 et 25 °C et le durcissement du matériau de paroi (phase de durcissement de la capsule).

11. Procédé selon la revendication 10, selon lequel l'agent d'oxydation est du peroxyde d'hydrogène.

12. Utilisation de la composition de microcapsules selon l'une des revendications précédentes 1 à 9 comme matériau à changement de phase (PCM) dans des accumulateurs de chaleur latente, des agents de polissage et/ou de lavage et de nettoyage, dans le domaine de l'industrie des parfums, comme espaceur dans les encres d'impression, comme indicateur ou unité de mesure pour des examens médicaux microscopiques, pour la fabrication de papiers autocopiants ainsi que dans le domaine de l'agriculture et de l'industrie pharmaceutique.
